(19) Europäisches Patentamt
European Patent Office
Office européen des brevets

(11) **EP 2 632 151 A2**

(12) **EUROPEAN PATENT APPLICATION**

(43) Date of publication:
**28.08.2013 Bulletin 2013/35**

(51) Int Cl.:
***H04N 5/357*** (2011.01)

(21) Application number: **13156279.5**

(22) Date of filing: **22.02.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **22.02.2012 JP 2012036080**<br>**22.01.2013 JP 2013008953** | (71) Applicant: **Ricoh Company, Ltd.**<br>**Tokyo 143-8555 (JP)**<br><br>(72) Inventor: **Sasaki, Tetsuya**<br>**Tokyo, 143-8555 (JP)**<br><br>(74) Representative: **Schwabe - Sandmair - Marx**<br>**Patentanwälte**<br>**Stuntzstraße 16**<br>**81677 München (DE)** |

(54) **Image capturing device and image capturing method**

(57)     An image capturing device (1) includes an image capturing unit (12) configured to acquire image data; an optical system (11) configured to form an image of incident light on the image capturing unit (12); a buffer memory (22) configured to store the image data acquired by the image capturing unit (12) for each line; a distortion amount calculation unit (24) configured to calculate an amount of distortion of the image data for each pixel; a pixel position conversion unit (41) configured to correct a distortion of the image data read from the buffer memory (22) on the basis of the amount of distortion; and a buffer memory control unit (42) configured to determine lines to be stored in the buffer memory (22) from the image data on the basis of a position in a sub-scanning direction in the image data.

## FIG.9

EP 2 632 151 A2

**Description**

TECHNICAL FIELD

The present invention relates to an image capturing device and an image capturing method.

BACKGROUND ART

In an image capturing device such as a camera device, optical distortion of an optical system such as a lens occurs. This occurs due to a distortion as a design value of a lens, manufacturing error, individual difference, and the like. To correct such distortion, conventionally, a method is known in which the amount of distortion is measured in advance and the distortion is corrected by referring to a LUT (Look Up Table) and also a method is known in which the distortion is corrected by approximation using a high degree polynomial.

In these distortion correction methods, a frame buffer and a line buffer for several lines are required.

When a line buffer is used, a buffer memory is required, whose number of lines is at least a maximum value of a sum of the amount of distortion in the plus direction and the amount of distortion in the minus direction in a sub-scanning direction + 1. For example, when the maximum value of the amount of distortion in the plus direction is 20 pixels and the maximum value of the amount of distortion in the minus direction is 20 pixels in the sub-scanning direction, including a case in which the amount of distortion is 0, a buffer memory for a total of 41 lines is required.

Since the memory resource is related to the cost of the product, it is desired to reduce the memory resource as much as possible. As a method to solve such a problem, a method is known in which an image is divided into four quadrants. This method will be described below.

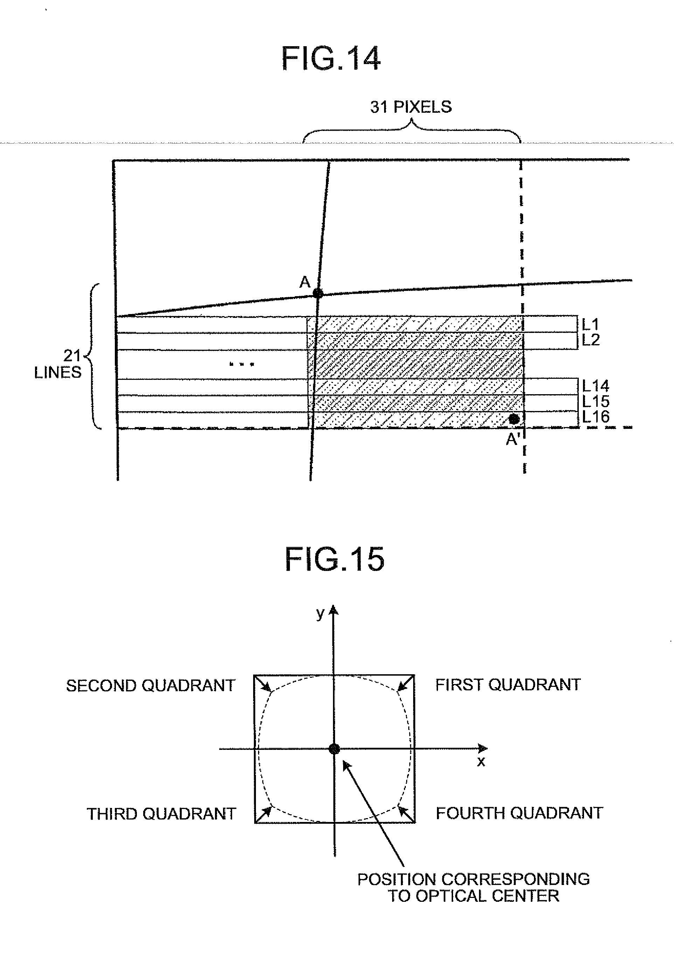

As illustrated in FIG. 15, an image is divided into four quadrants by a line in the main scanning direction (x) and a line in the sub-scanning direction (y) with reference to a position corresponding to an optical center of a lens. In this case, in the same quadrant, plus/minus directions of distortion are constant in each of the main scanning direction and the sub-scanning direction, so that, in one quadrant, distortion in either one of plus/minus directions occurs in each of the main scanning direction and the sub-scanning direction (or there is no distortion).

For example, at all points in the first quadrant in FIG. 15, distortion occurs in the minus direction in each of the x and y directions. Therefore, in the sub-scanning direction, only a line buffer for correcting distortion in either one of the plus and minus directions is needed for each quadrant, so that the capacity of the line buffer can be reduced to about a half.

However, the conventional correction methods can be applied only when it is assumed that the direction of the distortion in the main scanning direction and the sub-scanning direction is either one of the plus and minus directions in each of the four quadrants.

However, in practice, the above assumption may not be realistic. For example, in a stereo camera device including a plurality of cameras, highly accurate correction is required to calculate correlation between two cameras.

In this case, the direction of the correction and the amount of the correction are changed by a distortion due to positional relationship between a lens and an image capturing element, a relative positional shift between two cameras, and the like in addition to a distortion as a design value of a lens, manufacturing error, individual difference, and the like. In this case, there may be a situation in which the plus/minus direction of the distortion is reversed at the boundaries of the four quadrants or the plus/minus direction is not constant even in the same quadrant on the same line. In a camera device in which such a situation occurs, there is a problem that the distortion correction cannot be accurately performed by the number of lines in the line buffer determined by dividing an image into four quadrants with reference to the point corresponding to the optical center of the lens.

To solve the problem, Japanese Patent Application Laid-open No. 2008-236544 discloses a technique in which, when performing an optical distortion correction in a vertical direction (sub-scanning direction), an image is divided into four quadrants from the first quadrant to the fourth quadrant by an axis in the horizontal direction (main scanning direction) and an axis in the vertical direction whose origin is a position corresponding to the optical center of the lens and control of the line buffer is changed on the basis of a quadrant to be processed in order to reduce the number of necessary lines in the line buffer, so that the number of lines in the line buffer necessary to perform the process is reduced (halved).

However, the technique of Japanese Patent Application Laid-open No. 2008-236544 cannot solve a problem that an accurate distortion correction cannot be performed on a line in which the distortion direction in the sub-scanning direction is not either one of the plus/minus directions even in the same quadrant.

Therefore, there is a need to provide a camera device that can perform an accurate distortion correction using a small number of lines of a line buffer regarding a camera device that corrects an optical distortion due to a distortion as a design value of a lens, manufacturing error, and individual difference and a distortion due to positional relationship between the lens and an image capturing element or a stereo camera device which includes two or more cameras and corrects a relative positional shift between the cameras in addition to distortions described above.

DISCLOSURE OF INVENTION

It is an object of the present invention to at least partially solve the problems in the conventional technology.

According to an embodiment, there is provided an image capturing device that includes an image capturing unit configured to acquire image data; an optical system configured to form an image of incident light on the image capturing unit; a buffer memory configured to store the image data acquired by the image capturing unit for each line; a distortion amount calculation unit configured to calculate an amount of distortion of the image data for each pixel; a pixel position conversion unit configured to correct a distortion of the image data read from the buffer memory on the basis of the amount of distortion; and a buffer memory control unit configured to determine lines to be stored in the buffer memory from the image data on the basis of a position in a sub-scanning direction in the image data.

According to another embodiment, there is provided an image capturing method that includes acquiring image data from an image capturing unit on which an image of incident light is formed by an optical system; storing the image data into a buffer memory for each line; calculating an amount of distortion of the image data for each pixel; and correcting a distortion of image data read from the buffer memory on the basis of the amount of distortion. The storing includes determining lines to be stored in the buffer memory from the image data on the basis of a position in a sub-scanning direction in the image data.

The above and other objects, features, advantages and technical and industrial significance of this invention will be better understood by reading the following detailed description of presently preferred embodiments of the invention, when considered in connection with the accompanying drawings.

BRIEF DESCRIPTION OF DRAWINGS

FIG. 1 is a block diagram for explaining a hardware configuration of an image processing device applicable to a camera device according to a first embodiment of the present invention;

FIG. 2 illustrates a distortion of an image acquired by an image sensor illustrated in FIG. 1;

FIG. 3 is a diagram for explaining a movement of a pixel position;

FIG. 4 is a diagram for explaining functional blocks of a conventional pixel position conversion unit;

FIG. 5 illustrates an interpolation process performed by an interpolator;

FIG. 6 is a diagram for explaining a line buffer and a primary buffer of a pixel position conversion unit;

Fig. 7 is a diagram for explaining funcional blocks of a pixel position conversion unit according to a first embodiment;

FIG. 8 is a diagram for explaining the line buffer and the primary buffer of the pixel position conversion unit;

FIG. 9 is a diagram for explaining the line buffer and the primary buffer of the pixel position conversion unit;

FIG. 10 illustrates a correspondence between input lines and line images to be stored from an image data acquired by the image sensor;

FIG. 11 illustrates another correspondence between input lines and line images to be stored from an image data acquired by the image sensor;

FIG. 13 is a block diagram for explaining a hardware configuration of an image processing device applicable to a camera device according to a second embodiment of the present invention;

FIG. 14 is a diagram for explaining a line buffer and a primary buffer of a pixel position conversion unit; and

FIG. 15 is a diagram of a conventional technique in which an image is divided into four quadrants by a line in a main scanning direction (x) and a line in a sub-scanning direction (y) with reference to a position corresponding to an optical center of a lens.

BEST MODE(S) FOR CARRYING OUT THE INVENTION

Camera devices (corresponding to image capturing devices) according to embodiments of the present invention will be described. Specifically, a correction of an optical distortion due to a distortion as a design value of a lens, manufacturing error, and individual difference and a distortion due to positional relationship between the lens and an image capturing element in a camera device and a correction of a relative positional shift between two cameras in a stereo camera device that includes a plurality of cameras have the features described below.

When performing the above-described corrections, these camera devices determine a line to be stored in a line buffer according to a position in the sub-scanning direction in an input image, so that the camera devices need to be provided only a line buffer for storing a minimum necessary number of lines. As a result, the number of lines in the line buffer can be reduced.

Hereinafter, the embodiments will be described with reference to the drawings.

First Embodiment

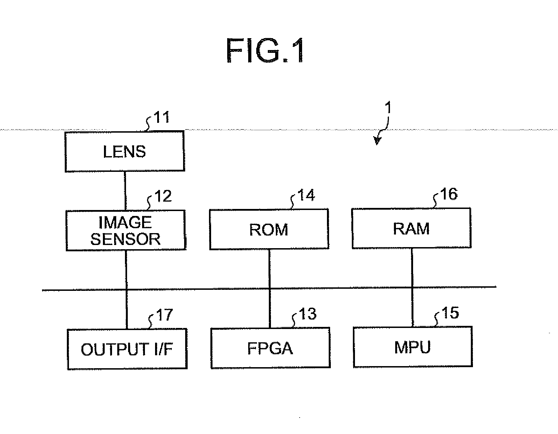

FIG. 1 is a block diagram for explaining a hardware configuration of an image processing device 1 that can be applied to a camera device according to a first embodiment of the present invention.

Incident light from an object is collected to an image sensor 12 through an optical system such as a lens 11 and converted into a digital image signal. The image sensor 12 is a charge coupled device (CCD) image sensor, a complementary metal oxide semiconductor (CMOS) image sensor, or the like and forms an image capturing unit that acquires image data.

Digital image data taken by the image sensor 12 is inputted into hardware such as a field programmable gate array (FPGA) 13 or the like and various image processing operations are performed on the digital image data. The image processing includes distortion correction processing (also referred to as "pixel position conversion processing") that corrects an optical distortion due to a distortion by a design value of the lens 11, manufacturing error, and individual difference, relative positional shift and rotational shift between the image sensor 12 and the optical system such as the lens 11, and a relative positional shift between cameras in a stereo camera including a plurality of cameras.

Normally, a non-volatile memory such as a read only memory (ROM) 14 stores configuration data and an operation called configuration is performed immediately after power begins to be supplied to the FPGA 13, so that an internal circuit for performing the image processing as described above is formed in the FPGA 13.

The ROM 14 stores an image correction parameter for performing the above described corrections, a processing program of an MPU described later, and the like in addition to the configuration data. The image correction parameter stored in the ROM 14 is a parameter unique to each camera device because the distortion and the positional shift of an image described above vary for each camera device. Here, the FPGA 13 is used as an example of an image processing block. However, the image processing block may be realized by an application specific integrated circuit (ASIC), a digital signal processor (DSP), or the like.

The image data on which the image processing described above is performed is inputted into a micro processing unit (MPU) 15 and various processing operations such as image recognition processing are performed on the image. The MPU 15 performs control of the entire camera device and the like. A random access memory (RAM) 16 is used as a work memory when various processing operations are performed in the MPU 15 or the image processing is performed in the FPGA 13 and as a frame memory that temporarily stores an image.

The image on which various processing operations are performed by the MPU 15 is outputted through an output I/F 17. For example, the image is converted into an analog video signal by a digital to analog converter (DAC) and outputted to a display device, or outputted to a next-stage device as a digital signal.

The present invention can be applied to a stereo camera in which a plurality of pairs of the lens 11 and the image sensor 12 are provided in the configuration of GIG. 1. Hardware components such as the FPGA 13, the number of which is the same as the number of the lenses 11 and the image sensors 12, are provided, so that the distortion correction can be performed on each optical system by the method described below.

Of course, only one hardware component such as the FPGA 13 is provided and the hardware component may be shared by each optical system.

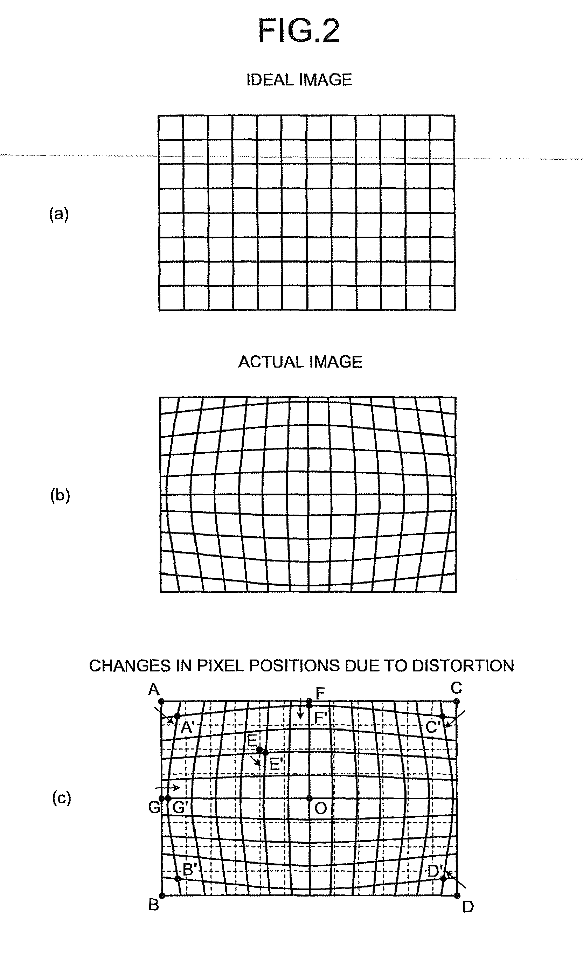

FIG. 2 is a diagram for explaining a distortion of an image acquired by the image sensor 12 illustrated in FIG. 1.

In FIG. 2, (a) illustrates an ideal image expected to be acquired, (b) illustrates an actual image that is actually acquired, and (c) illustrates a diagram schematically illustrating changes of pixel positions by the distortion. Here, for simplicity of description, a grid pattern is used as an example. Although a barrel distortion will be described here, the present invention can be applied to a spool distortion.

As illustrated in (b) of FIG. 2, a distortion occurs in an image that is actually acquired. The distortion is generated by the characteristics and variation of the optical system or a positional shift and a rotational shift between the optical system such as the lens 11 and the image sensor 12. The position of each pixel included in the image is moved by the distortion.

As illustrated in (c) of FIG. 2, the movement direction and the amount of movement of each pixel by the distortion vary depending on the position of the pixel in the image. For example, the pixel located at the point A near the upper left end in the image is largely moved toward the lower right and the point B located near the lower left end in the image is largely moved toward the upper right. On the other hand, although the point E at the upper center left of the image which is relatively near the center of the image is moved toward the lower right, the amount of the movement of the point E is smaller than that of the point A. The point O near the center of the image is hardly moved.

Regarding the point F on a vertical (Y direction) straight line that passes through the point O, the amount of movement in the X direction is substantially zero and the amount of movement in the Y direction is smaller than that of the points A and C which are on the same line in the X direction. In the same manner, regarding the point G on a horizontal (X direction) straight line that passes through the point O, the amount of movement in the X direction is smaller than that of the points A and B which are on the same line in the Y direction and the amount of movement in the Y direction is substantially zero. In summary, the nearer to the center of the image a pixel is, the smaller the amount of movement of the pixel due to the distortion is in both the X and Y directions, and the farther from the center a pixel is, the greater the amount of the movement of the pixel is.

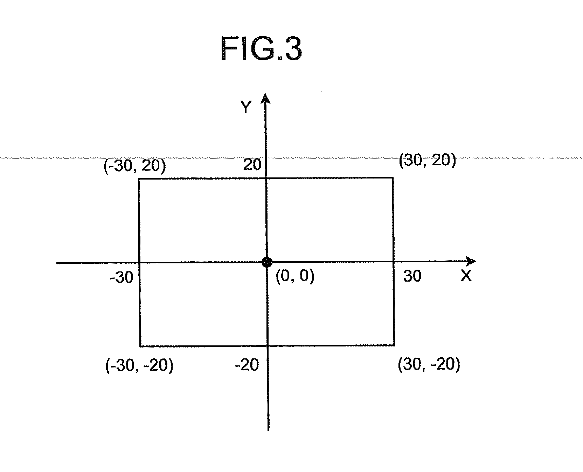

FIG. 3 is a diagram for explaining the movement of the pixel position and is an example illustrating how much the pixel position moves at most.

When the pixel position before the movement is (0, 0), the horizontal direction in FIG. 3 is an X axis, and the vertical direction in FIG. 3 is a Y axis, the point at the upper left end in the image (the point A in (c) of FIG. 2) moves to about a position of (30, -20). In other words, the point moves +30 pixels in the X direction and -20 pixels in the Y direction.

Similarly, the point at the upper right end in the image (the point C in (c) of FIG. 2) moves to about a position of (-30, -20), the point at the lower left end in the image (the point B in (c) of FIG. 2) moves to about a position of (30, 20), and the point at the lower right end in the image (the point D in (c) of FIG. 2) moves to about a position of (-30, 20). In summary, the maximum amount of movement of all the pixels in the image is -30 to +30 in the X direction and -20 pixels to +20 pixels in the Y direction. In other words, when the pixel position conversion processing is performed, if there are peripheral pixels in a range described above around the pixel position of a target pixel of the pixel position conversion processing, the pixel position conversion processing can be performed. The numerical values illustrated in FIG. 3 are examples and the values are not limited to those in practice.

Regarding only the Y direction, on a straight line passing through the center of the image O in (c) of FIG. 2 in the horizontal direction (X direction), the distortion in the Y direction is zero at all points.

However, the distortion is not necessarily zero in a case of a camera device which requires highly accurate correction such as a correction by a sub-pixel unit that is smaller than one pixel.

In (c) of FIG. 2, the distortion occurs top and bottom symmetrically with respect to a line passing through the optical center O in the horizontal direction (X direction) and left and right symmetrically with respect to a line passing through the optical center O in the vertical direction (Y direction). However, a subtle shift occurs depending on the individual difference of the lens and the positional relationship between the lens and the image capturing element.

As a result, in a camera device which requires highly accurate distortion correction, the amount of distortion and the direction of distortion are not the ideal amount of distortion and the ideal direction of distortion as described above, so that it is not possible to correct the distortion by simply dividing the image into four quadrants as described in the description of the conventional technique. Therefore, it is necessary to obtain the amount of distortion and the direction of distortion for each pixel for each camera device and correct the distortion.

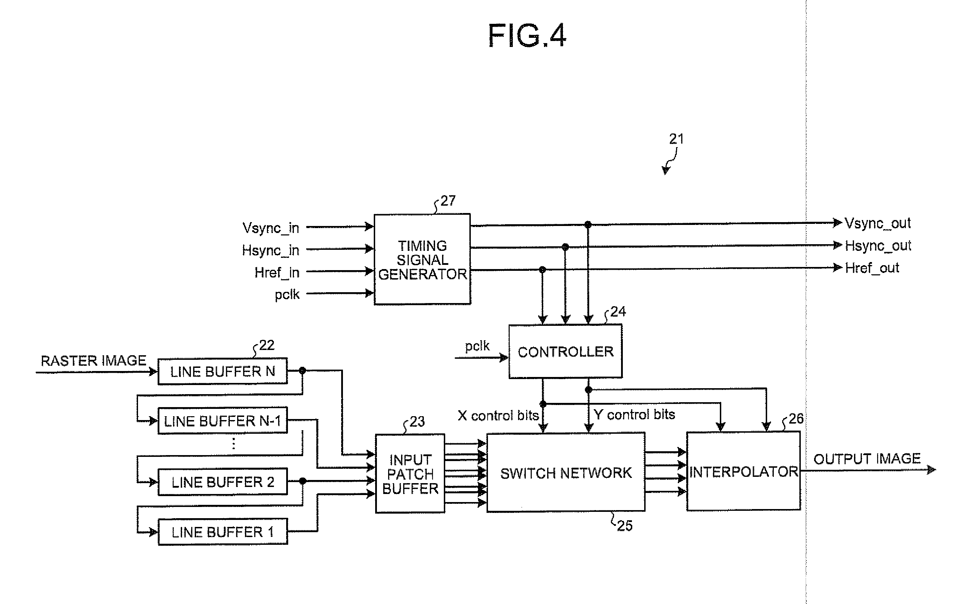

First, the functional configuration of a conventionally known image position conversion unit illustrated in FIGS. 4 to 6 and a concept of the distortion correction in the camera device of the present embodiment will be described.

FIG. 4 is a diagram for explaining functional blocks of a pixel position conversion unit 21 that can be applied to a conventional camera device.

The pixel position conversion unit 21 illustrated in FIG. 4 is a functional block formed in the hardware such as the FPGA 13 illustrated in FIG. 1 and an ASIC.

First, inputted image data is stored in a line buffer 22 for each line. The number of lines in the line buffer is determined by the maximum amount of movement in the Y direction described using FIG. 3. In the example of FIG. 3, the amount of movement in the Y direction is 20 pixels in the plus direction and 20 pixels in the minus direction, so that a line buffer of 41 lines including a line of a target pixel are required.

The line buffer 22 forms a buffer memory that stores acquired image data for each line. When the pixel position conversion unit 21 is formed by an FPGA, the line buffer is formed by a memory resource (BRAM: Block RAM) or the like of a hardware macro. In a stereo camera using a plurality of cameras, a line buffer is required for each camera.

The maximum value of the distortion is determined by a design value of a lens, a manufacturing error of the lens, an assembly error when the camera is assembled, a relative position between the lens and an image sensor, a relative position between two cameras in a stereo camera using a plurality of cameras, and the like. The amount of distortion in the X direction and the amount of distortion in the Y direction which are generated in each pixel in the image by the above factors can be obtained by calibration performed when the camera is assembled. The distortions in the X direction (the main-scanning direction) and the Y direction (the sub-scanning direction) at each pixel, which are obtained by the calibration, are represented by an LUT (lookup table) or represented by a high degree polynomial and the amount of correction (the amount of pixel movement) at each pixel in the input image is calculated by the controller 24 described later.

In a case of the LUT method, a reference source pixel is determined by the LUT. In a case of a high degree polynomial method, for example, coefficients of a polynomial expression are obtained by the calibration, the camera device holds only the coefficients, and the amount of correction (the amount of pixel movement) at each pixel is calculated in real time based on the coefficients.

A primary buffer (input patch buffer) 23 reads image data of an area illustrated in FIG. 3 from the image data stored in the line buffer 22 and holds the read image data. Specifically, in the example illustrated in FIG. 3, the primary buffer 23 holds a total of 61 pixels in the horizontal direction including 30 pixels in the plus direction, 30 pixels in the minus direction, and a target pixel regarding the X direction and a total of 41 pixels in the vertical direction including 20 pixels in the plus direction, 20 pixels in the minus direction, and a target pixel regarding the Y direction. In summary, the primary buffer 23 holds image data of 61 pixels × 41 lines. In practice, the primary buffer 23 is formed by a flip-flop group or a memory resource (BRAM: Block RAM) or the like of a hardware macro when an FPGA or the like is used.

In the case that the primary buffer 23 is formed by the former, that is, a flip-flop group, for example, if the bit depth of pixel is 12 bits, 61 × 41 flip-flops having a width of 12 bits are required, that is, 2,501 flip-flops are required.

In the case that the primary buffer is realized by the latter, that is, the BRAM, the BRAMs, the number of which is (the number of pixels required on one line) × (the number of lines in the line buffer), are required although depending on an interpolation process of an interpolator 26 described later. For example, the interpolation process of the interpolator is a bilinear method that requires 2 × 2 pixels, 2 × 41 BRAMs, that is, 82 BRAMs, are required.

The controller 24 outputs a signal that determines what pixel in the image data of 61 pixels × 41 lines held in the primary buffer is outputted. More specifically, the controller 24 calculates the amount of pixel movement in the X direction and the amount of pixel movement in the Y direction, each of which includes an integer part and a fractional part. The integer part of the amount of pixel movement is transmitted to a switch network 25 and the fractional part is transmitted to the interpolator 26.

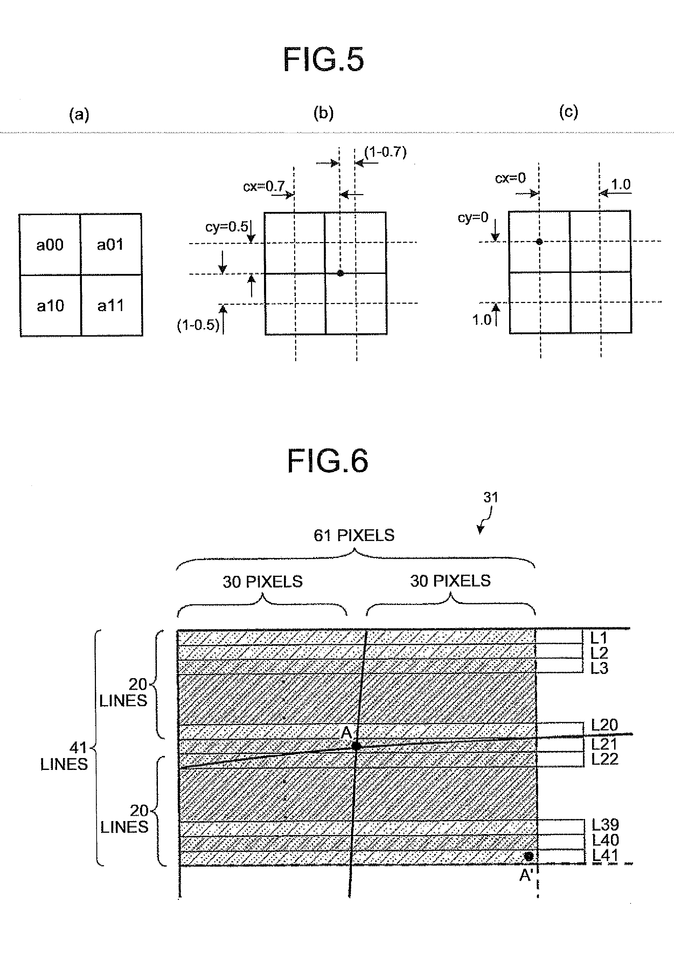

The switch network 25 selects a pixel to be outputted from the image data of 61 pixels × 41 lines held in the primary buffer on the basis of information of the amount of pixel movement outputted from the controller 24 and outputs the pixel. Here, as an example, image data of a total of four pixels including a pixel determined by the integer part of the amount of pixel movement and pixels adjacent to the pixel is outputted by assuming that a 2 × 2 interpolation process is performed by the interpolator 26 in the next stage. Here, the pixel determined by the integer part of the amount of pixel movement is defined as $a_{00}$ and the pixels adjacent to the pixel are defined as $a_{01}$, $a_{10}$, and $a_{11}$ respectively. Illustrated in (a) of FIG. 5 is a positional relationship between these pixels.

The interpolator 26 outputs one image data considering a ratio among the four pixels selected and outputted by the switch network 25. More specifically, the interpolator 26 calculates the influence of pixel values of the four pixels according to what point the value indicated by the amount of pixel movement indicates in an area formed by the centers of the four pixels and outputs one pixel data. The details of the interpolation process by the interpolator 26 will be described later.

A timing signal generator 27 generates synchronizing signals of an output image, such as a vertical synchronizing signal Vsync, a horizontal synchronizing signal Hsync, and an effective line signal Href by considering the number of processing clocks in the pixel position conversion unit.

FIG. 5 illustrates the interpolation process performed by the interpolator 26.

Hereinafter, the interpolation process performed by the interpolator 26 will be described. As described above, the interpolator 26 calculates the influence of pixel values of the four pixels according to what point the value indicated by the amount of pixel movement indicates in an area formed by the centers of the four pixels and outputs one pixel data. The calculation formula of the interpolation process is as follows:

$$d_{out} = (1-c_y) \times [\{(1-c_x) \times a_{00}\} + (c_x \times a_{01})] + c_y \times [\{(1-c_x) \times a_{10}\} + (c_x \times a_{11})] \quad (1)$$

Here, dout is an output pixel value, $c_x$ is a fractional value in the X direction, $c_y$ is a fractional value in the Y direction, and $a_{00}$, $a_{01}$, $a_{10}$, and $a_{11}$ are pixel values of each pixel. When the value indicated by the amount of pixel movement is the position indicated in (b) of FIG. 5, that is, when the ratio of $a_{00}$ to $a_{01}$ is 7 to 3 in the X direction ($c_x$ = 0.7) and the ratio of a00 to a10 is 5 to 5 in the Y direction ($c_y$ = 0.5), the output pixel value is as follows:

$$d_{out} = 0.15 \times a_{00} + 0.35 \times a_{01} + 0.15 \times a_{10} + 0.35 \times a_{11} \quad (2)$$

Similarly, when the value indicated by the amount of pixel movement is the position indicated in (c) of FIG. 5, that is, the center of the a00 ($c_x$ = 0 and $c_y$ = 0), the output pixel value is as follows:

$$d_{out} = a_{00} \quad (3)$$

In other words, in this case, $a_{00}$ is outputted without change.
The interpolation process as described above is performed by the interpolator 26.

FIG. 6 is a diagram for explaining a line buffer and a primary buffer of a pixel position conversion unit 31 applicable to a conventional camera device.

FIG. 6 is an enlarged diagram of the upper left end in the image of (c) of FIG. 2. For the simplicity of the description, the positions of points A and A' are illustrated somewhat near the center of the image. The point A moves to the point A' by distortion. As described above, the maximum amount of pixel movement in the image is ±30 pixels in the X direction and ±20 lines in the Y direction. The amount of movement of the point A located at the upper left end in the image is +30 pixels in the X direction and -20 lines in the Y direction.

Although not illustrated in FIG. 6, the amount of movement of a point B at the lower left end in the image is +30 pixels in the X direction and +20 pixels in the Y direction. To correct this, the pixel position conversion unit 21 stores a total of 41 lines including the ±20 lines which are the maximum amount of movement in the Y direction and a line in the case in which the amount of movement is zero into the line buffer 22. In the example of FIG. 6, L1 to L41 correspond to the line buffer.

When considering correcting the pixel moved to the point A' by distortion to the ideal position A without distortion, first, as illustrated in FIG. 6, the L1 to L41 are stored in the line buffer. Next, data of a total of 61 pixels including the ±30 pixels which are the maximum amount of movement in the X direction and a pixel in the case in which the amount of movement is zero is read from the lines stored in the line buffer of L1 to L41 and the data is stored in the primary buffer.

In the example illustrated in FIG. 6, the data is indicated by the shaded area of 61 pixels × 41 lines. The amount of correction in each of the X and Y directions is calculated by the controller 24 illustrated in FIG. 4. A target pixel is selected by the switch network 25 on the basis of the amount of correction and the target pixel is outputted. In this example, regarding the output pixel at the position of the point A, a pixel value of the point A', which is located away from the point A by +30 pixels in the X direction and -20 lines in the Y direction, is outputted.

Next, a configuration of the pixel position conversion unit 41 according to the embodiment will be described.

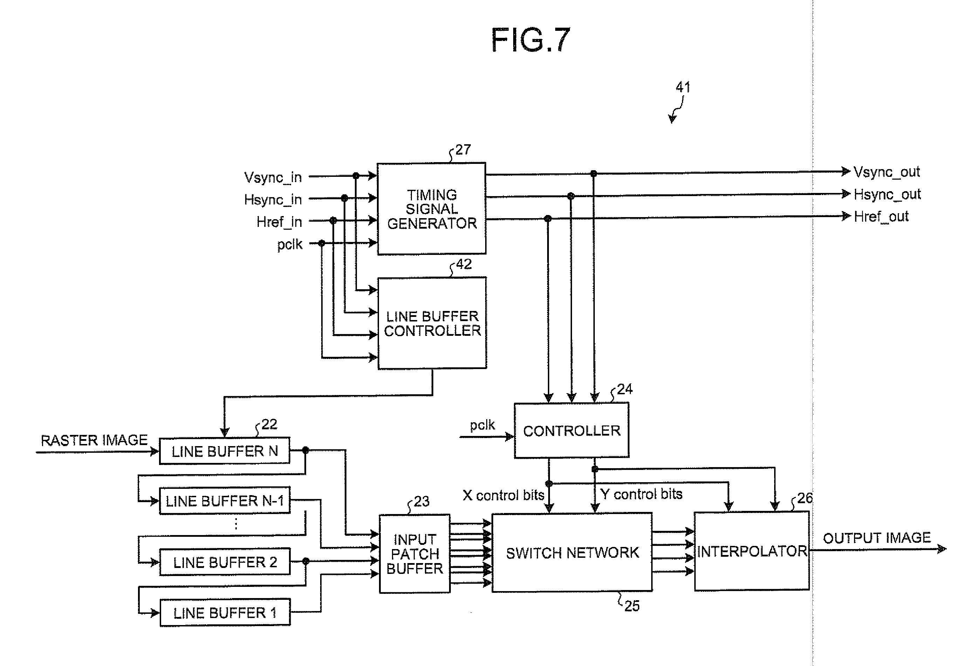

FIG. 7 is a diagram illustrating an example of functional blocks of the pixel position conversion unit 41 according to the first embodiment.

The pixel position conversion unit 41 illustrated in FIG. 7 is a functional block formed in the hardware such as the FPGA 13 illustrated in FIG. 1 and an ASIC.

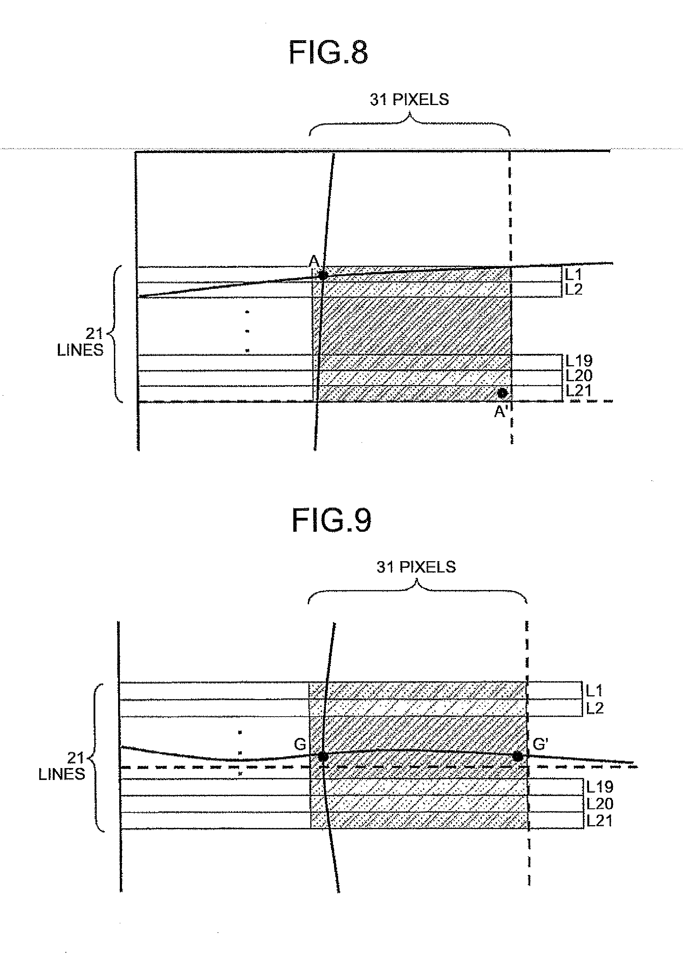

FIGS. 8 and 9 are diagrams for explaining the line buffer 22 and the primary buffer of the pixel position conversion unit 41.

As illustrated in FIG. 7, the pixel position conversion unit 41 further includes a line buffer controller (an example of a line buffer control unit) 42 compared with the pixel position conversion unit 21 illustrated in FIG. 4. The line buffer controller 42 forms a buffer memory control unit that determines lines to be stored in the line buffer 22 according to the position in the sub-scanning direction in the image data. The pixel position conversion unit 41 has a function to count the number of lines on the basis of the synchronizing signals such as Vsync_in, Hsync_in, and Href_in, and determines pixels in what lines to be stored in the line buffer 22 at what line in the image.

For example, the pixel of the point A illustrated in (c) of FIG. 2 is moved to the point A' located at +30 pixels in the X direction and -20 lines in the Y direction by the distortion of the image as described above. Similarly, the pixel of the point C at the upper right end on the same line as the point A in the X direction is moved to the point C' located at -30 pixels in the X direction and -20 lines in the Y direction and the pixel of the point F on the Y axis on the same line is moved to the point F' moved by substantially zero pixel in the X direction and located at smaller than 20 lines in an absolute value in the minus direction in the Y direction.

As a result, in the Y direction, any point in the same line moves in the same minus direction and the absolute value of the amount of the movement is smaller than or equal to 20. Therefore, in the Y direction, if 21 lines are stored at most in the line buffer, the correction can be performed. FIG. 9 illustrates an enlarged area around the point A illustrated in (c) of FIG. 2. As illustrated in FIG. 9, at the upper end of the image, a total of 21 lines including a line in which the target pixel is included and 20 lines from the line in the minus direction are stored in the line buffer. In FIG. 8, L1 to L21 correspond to the above 21 lines.

On the other hand, the pixel of the point G on a line passing through the point O corresponding to the optical center illustrated in (c) of FIG. 2 in the X direction (X axis) is moved to the point G' on substantially the same line. FIG. 9 illustrates the above situation (actually, the point G is a pixel above the X axis by a half pixel or a pixel below the X axis by a half pixel. In FIG. 9, the point G is a pixel above the X axis by a half pixel.). At this time, if an ideal distortion occurs, the absolute value of the amount of movement is smaller than or equal to 30 pixels in the plus direction in the X direction and substantially zero in the Y direction.

However, as illustrated in FIG. 9, the amount of movement in the Y direction is not necessarily zero due to a manufacturing error and an individual difference of an actual lens and a relative position between the lens and the image capturing sensor. The amount of movement in the Y direction is unignorable in a camera device, which requires highly accurate distortion correction, such as a stereo camera device which performs a correlation calculation between images from a camera device including two or more image capturing elements and two or more optical systems. Therefore, the pixel position conversion unit 41 stores pixels of a total of 21 lines including a line in which the target pixel is included, 10 lines immediately above the line, and 10 lines immediately below the line into the line buffer. By doing so, it is possible to accurately perform the distortion correction even when the movement direction in the Y direction varies in the plus and minus directions in the same line.

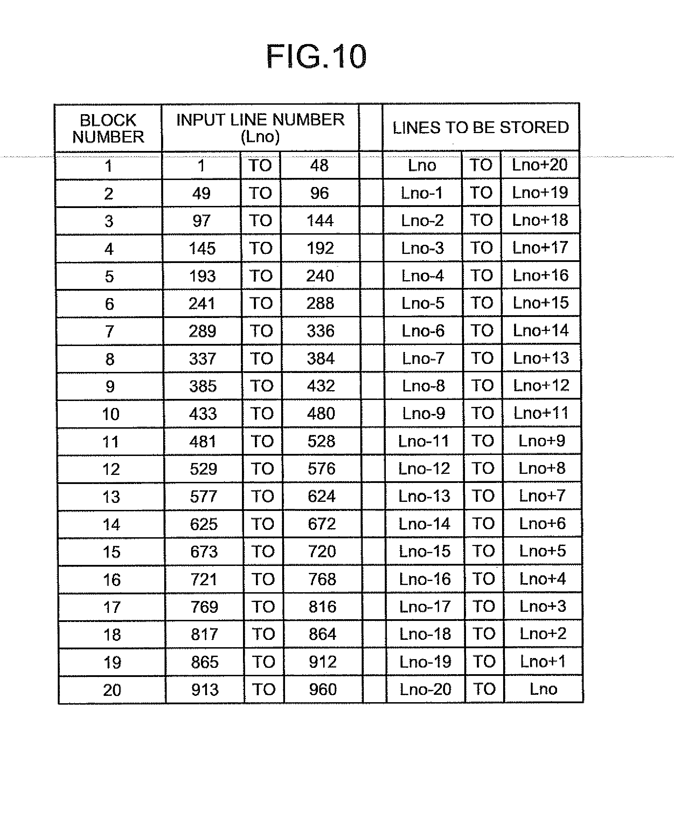

The above operation will be described in further detail with reference to FIGS. 10 to 12.

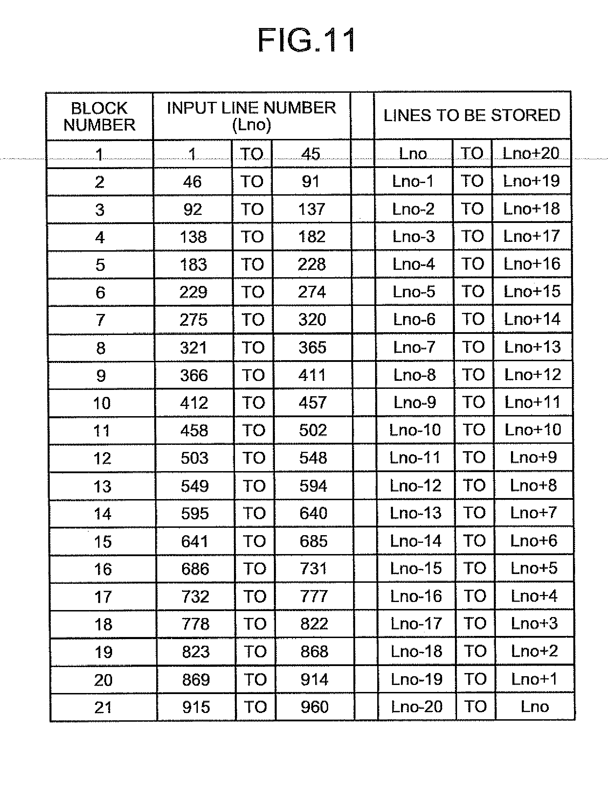

FIGS. 10 and 11 illustrate correspondences between input lines and lines whose pixels are stored when an image is inputted from the image sensor 12.

In the description below, it is assumed that the number of pixels in the entire image is 1280 pixels × 960 lines.

In FIG. 10, the input lines are divided into 20 blocks; in FIG. 11, the input lines are divided into 21 blocks.

As described above, in the upper end of the image (area near the first line), a distortion of maximum -20 lines occurs in the sub-scanning direction. As a result, when the first line is outputted, if there is an image of a total of 21 lines from the first line to the 21st line, the first line can be outputted after correcting the distortion. On the other hand, in the lower end of the image (area near the 960th line), a distortion of maximum +20 lines occurs in the sub-scanning direction.

As a result, an image of a total of 21 lines from the 940th line to the 960th line is required to output the 960th line. In an area near the center of the image (area near the 480th line), although the distortion in the sub-scanning direction is smaller than that in the ends of the image, a distortion in the vertical direction may occur. The distortion can be sufficiently corrected if there is, for example, an image from the 471st line to the 491st line. Specifically, when selecting 21 lines from 960 lines, the 960 line is equally divided into 20 blocks and lines to be stored in the line buffer are switched at the boundaries between the blocks.

In the example of FIG. 10, the lines to be stored are switched every 48 lines.

From the first to the 48th line, when the target line number is Lno, lines from the (Lno)th line to the (Lno + 20)th line are stored in the line buffer. Specifically, at the first line, 21 lines from the first line to the 21st line are stored, and at the second line, 21 lines from the second line to the 22nd line are stored. Similarly, at the 48th line, 21 lines from the 48th line to the 68th line are stored.

On the other hand, from the 49th line, the next block is used, so that lines from the (Lno - 1)th line to the (Lno + 19)th line are stored in the line buffer. As a result, at the 49th line, lines from the 48th line to the 68th line are stored. This is the same as the image data required to output the 48th line. Therefore, at the timing when the block is switched, the image stored in the line buffer does not change. At the 50th line, 21 lines from the 49th line to the 69th line are stored. Thereafter, in the same manner as in the first block, lines are stored in the line buffer by shifting one line at a time.

As described above, at each line illustrated in FIG. 10, it is controlled so that lines corresponding to the line are stored. Therefore, it is possible to correct the distortion by using a line buffer smaller than that in a conventional method. In the example in FIG. 10, 960 lines are divided into 20 blocks, so that the lines to be stored are shifted by two lines between the block 10 and the block 11 which correspond to the center of the image. As described above, the amount of distortion in the sub-scanning direction is small near the center of the image, so that it is possible to sufficiently correct the distortion even when using such a block division. On the other hand, FIG. 11 illustrates an example in which the image is divided into 21 blocks. In this case, there is no operation in which two lines are shifted between the blocks. However, the total number of lines cannot be divided by the number of blocks, so that the fractional part of the number of input lines corresponding to each block needs to be rounded off, rounded down, or rounded up to set target input lines. Further, the number of input lines corresponding to each block varies, so that the switching timing between the blocks is somewhat complicated.

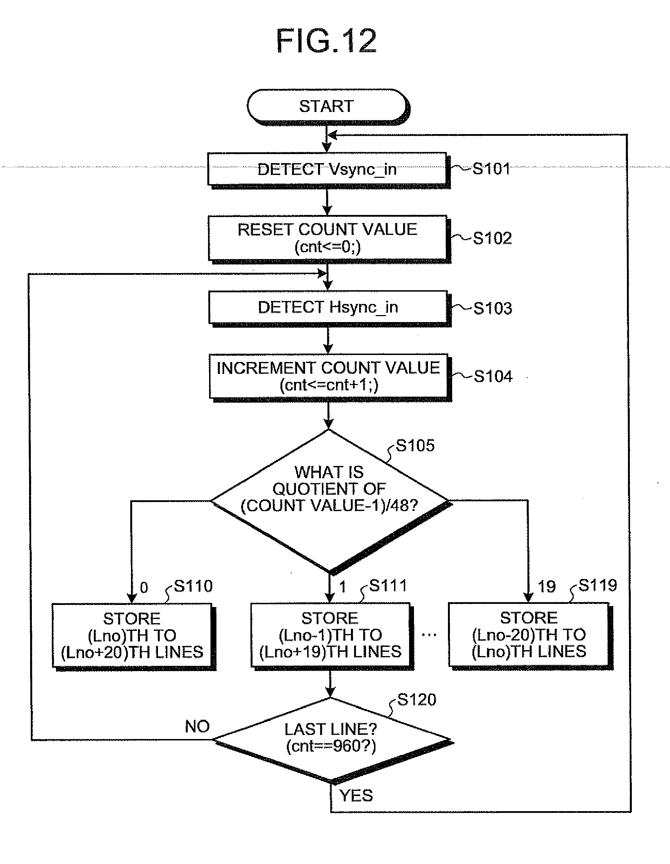

FIG. 12 is a flowchart illustrating processing of the line buffer controller 42.

Here, an example is illustrated in which the lines to be stored are determined by the blocks illustrated in FIG. 10. The line buffer controller 42 includes a counter for counting the number of input lines.

When detecting an input of Vsync_in that indicates a head of one frame of an image (Step S101), the line buffer controller 42 resets a count value cnt of the counter to an initial value (here, 0) (Step S102).

Thereafter, each time the line buffer controller 42 detects an input of Hsync_in that indicates a head of each line, the line buffer controller 42 increments the count value of the counter by 1.

Then, the line buffer controller 42 checks the quotient of (count value -1)/48 (Step S105).

As illustrated in FIG. 10, the lines to be stored are switched every 48 input lines in each block. Therefore, it is possible to determine which block is currently processed by checking the quotient of (count value -1)/48. In practice, the quotient +1 is a block number.

Specifically, the quotient is 0 at the first line, so that it is possible to determine that the block number is block 1. Therefore, the line buffer controller 42 stores 21 lines from Lno to Lno + 20 in the line buffer 22 (Step S110).

In the same manner, the quotient is 0 at the 48th line, so that it is possible to determine that the block number is block 1.

On the other hand, the quotient is 1 at the 49th line, so that it is possible to determine that the block number is block 2. Therefore, the line buffer controller 42 stores 21 lines from Lno - 1 to Lno + 19 in the line buffer 22 (Step S111).

By performing such an operation, the line buffer controller 42 selects 21 lines corresponding to each line and stored them in the line buffer.

If the quotient is 2 to 19 (the block number is determined as 3 to 20), the line buffer controller 42 stores 21 lines of "Lno - 2 to Lno + 18" to "Lno -20 to Lno" in the line buffer 22 (Step S119) as illustrated in FIG. 10.

After 21 lines are stored in the line buffer 22, the line buffer controller 42 determines whether or not the input line is the last line (here, the 960th line) (Step S120).

At the first to the 959th lines (Step S120, No), the line buffer controller 42 determines that the input line is not the last line and thus waits for an input of Hsync_in (Step S103) in order to input the next line.

On the other hand, at the 960th line (Step S120, Yes), all the lines in one frame have been stored in the line buffer. Accordingly, the line buffer controller 42 waits for an input of Vsync_in (Step S103) in order to input the next frame.

Thereafter, the above operation is repeated until the input of the image is completed by, for example, stopping the camera device.

The process after that is basically the same as the operation of the pixel position conversion unit 21. However, the capacity of the primary buffer can be small because the number of lines stored in the line buffer is smaller than that of the pixel position conversion unit 21.

The primary buffer holds a total of 61 pixels in the horizontal direction including 30 pixels in the plus direction, 30 pixels in the minus direction, and a target pixel regarding the X direction and a total of 21 pixels in the vertical direction including 20 pixels in the minus direction and a target pixel regarding the Y direction. In summary, the primary buffer holds image data of 61 pixels $\times$ 21 lines of the image data stored in the line buffer.

In the same manner as in the pixel position conversion unit 21, the primary buffer is actually formed by a flip-flop group or a memory resource (BRAM) or the like of a hardware macro when an FPGA or the like is used. When the primary buffer is formed by the former, for example, if the bit depth of pixel is 12 bits, $61 \times 21$ flip-flops having a width of 12 bits are required, that is, 1,281 flip-flops are required. As a result, the number of flip-flops can be reduced to about half compared with a conventional technique. When the primary buffer is realized by the latter, if the interpolation process of the interpolator in the next stage is a bilinear method that requires $2 \times 2$ pixels, $2 \times 21$ BRAMs, that is, 42 BRAMs, are required. As a result, the number of BRAMs can be also reduced to about half compared with the pixel position conversion unit 21.

As described above, it is possible to reduce the number of lines in the line buffer to one half and also reduce the capacity of the primary buffer to one half by the operation of the pixel position conversion unit 41. Even when the plus/minus direction varies in the Y direction on the same line, the distortion can be accurately corrected.

As a result, it is possible to perform an accurate distortion correction using a small number of lines in the line buffer in a camera device that corrects an optical distortion due to a distortion as a design value of a lens, manufacturing error, and individual difference and a distortion due to positional relationship between the lens and an image capturing element or a stereo camera device which includes two or more cameras and corrects a relative positional shift between the cameras in addition to distortions described above.

Second Embodiment

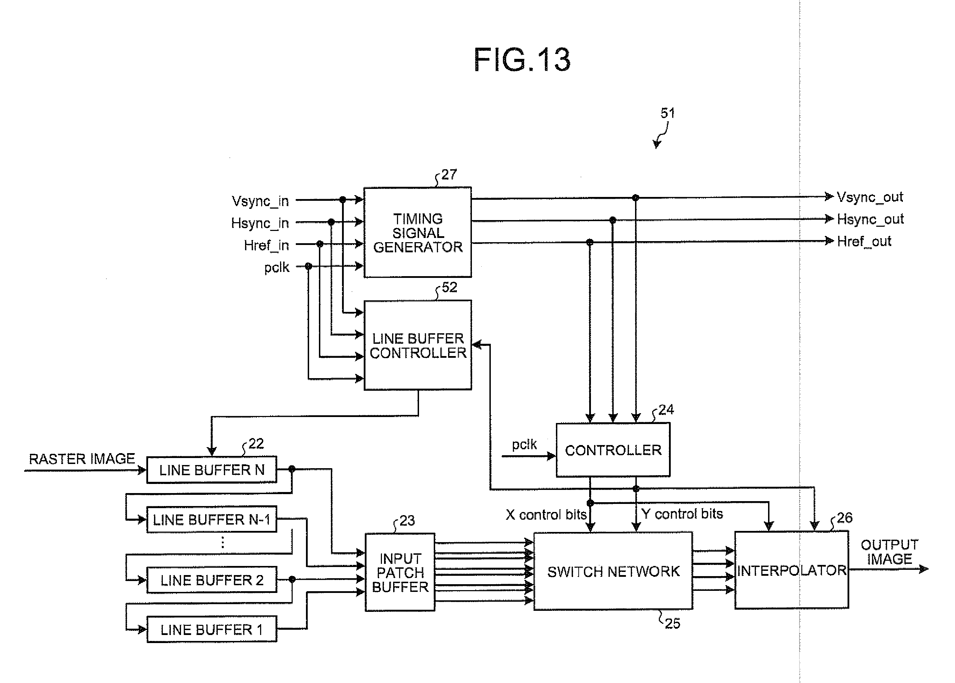

FIG. 13 is a diagram for explaining a hardware configuration of a pixel position conversion unit 51 that can be applied to a camera device according to a second embodiment of the present invention.

FIG. 14 is a diagram for explaining a line buffer 22 and a primary buffer of the pixel position conversion unit 51.

In FIG. 13, a controller 24 forms a distortion amount calculation unit that calculates the amount of distortion of image data for each pixel and the amount of distortion in the Y direction calculated by the controller 24 is inputted into a line buffer controller 52. The line buffer controller 52 controls in more detail the lines to be stored in the line buffer 22 than the first embodiment illustrated in FIG. 7 according to the direction of distortion and the amount of distortion in the Y direction calculated by the controller 24.

Specifically, as described using FIGS. 2 and 8, in FIG. 14, at the point A at the upper left end on the image, a distortion of +30 pixels in the X direction and -20 lines in the Y direction occurs, at the point C at the upper right end on the image, a distortion of -30 pixels in the X direction and -20 lines in the Y direction occurs, and at the point F at the upper central end on the image, a distortion of substantially zero movement in the X direction and smaller than 20 in an absolute value in the minus direction in the Y direction occurs.

At this time, when the amount of movement of the point F in the Y direction is -5 lines, the amount of movement in the Y direction on a line including the points A, C, and F is -5 to - 20 lines. As a result, if a total of 16 lines are stored in the line buffer 22, the distortion can be corrected.

Similarly, when the amount of movement in the Y direction at the lower end of the image is +5 to +20 lines, if the number of lines stored in the line buffer 22 is 16, the distortion can be corrected. On a line (to be exact, shifted by a half pixel in the upward direction and the downward direction) on the X axis passing through the point O corresponding to the optical center, even when the plus/minus direction varies on the same line, the amount of movement is small, so that the distortion can be sufficiently corrected by the line buffer 22 of 16 lines.

Also, at any line between the upper end line and the line on the X axis and between the line on the X axis and the lower end line, the distortion can be corrected by the line buffer 22 of 16 lines.

As described above, the line buffer controller 52 determines in more detail the lines to be stored in the line buffer 22 by using the direction of distortion (including the plus/minus directions) and the amount of distortion in the Y direction which are calculated by the controller 24, so that the memory resources of the line buffer 22 and the primary buffer can be reduced more than those in the first embodiment.

According to the embodiments, since the image capturing device is configured as described above, the image capturing device includes a buffer memory control unit that determines a line to be stored in the buffer memory according to the position in the sub-scanning direction, so that it is possible to realize an accurate distortion correction using a small number of lines in the line buffer even when the plus/minus direction of the distortion varies in each quadrant or the plus/minus direction of the distortion varies in the sub-scanning direction on a certain line.

As a result, it is possible to perform an accurate distortion correction using a small number of lines in the line buffer in a camera device that corrects an optical distortion due to a distortion as a design value of a lens, manufacturing error, and individual difference and a distortion due to positional relationship between the lens and an image capturing element or a stereo camera device which includes two or more cameras and corrects a relative positional shift between the cameras in addition to distortions described above.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1.   An image capturing device (1), comprising:

   an image capturing unit (12) configured to acquire image data;
   an optical system (11) configured to form an image of incident light on the image capturing unit (12);
   a buffer memory (22) configured to store the image data acquired by the image capturing unit (12) for each line;
   a distortion amount calculation unit (24) configured to calculate an amount of distortion of the image data for each pixel;
   a pixel position conversion unit (41) configured to correct a distortion of the image data read from the buffer memory (22) on the basis of the amount of distortion; and
   a buffer memory control unit (42) configured to determine lines to be stored in the buffer memory (22) from the image data on the basis of a position in a sub-scanning direction in the image data.

2.   The image capturing device (1) according to claim 1, wherein the buffer memory control unit (42) determines the lines to be stored in the buffer memory on the basis of a direction of distortion in the sub-scanning direction for each line and a maximum value of the amount of distortion.

3.   The image capturing device (1) according to claim 1 or 2, further comprising two or more of image capturing units each corresponding to the image capturing unit (12) and two or more of optical systems each corresponding to the optical system (11).

4.   An image capturing method comprising:

   acquiring image data from an image capturing unit (12) on which an image of incident light is formed by an optical system (11);
   storing the image data into a buffer memory (22) for each line;
   calculating an amount of distortion of the image data for each pixel; and
   correcting a distortion of image data read from the buffer memory (22) on the basis of the amount of distortion, wherein
   the storing includes determining lines to be stored in the buffer memory (22) from the image data on the basis of a position in a sub-scanning direction in the image data.

# FIG.1

LENS — 11

IMAGE SENSOR — 12

ROM — 14

RAM — 16

OUTPUT I/F — 17

FPGA — 13

MPU — 15

1

# FIG.2

IDEAL IMAGE

(a)

ACTUAL IMAGE

(b)

CHANGES IN PIXEL POSITIONS DUE TO DISTORTION

(c)

# FIG.3

# FIG.4

# FIG.5

(a)                    (b)                    (c)

# FIG.6

# FIG.7

Vsync_in ──────────→ [TIMING SIGNAL GENERATOR] ⌐27 ──────→ Vsync_out

Hsync_in ──────────→ ──────→ Hsync_out

Href_in ──────────→ ──────→ Href_out

pclk ──────────→

[LINE BUFFER CONTROLLER] ⌐42

RASTER IMAGE ──────→ [LINE BUFFER N] ⌐22

[LINE BUFFER N-1]

[LINE BUFFER 2]

[LINE BUFFER 1]

pclk ──────→ [CONTROLLER] ⌐24

[INPUT PATCH BUFFER] ⌐23

X control bits          Y control bits

[SWITCH NETWORK] ⌐25

[INTERPOLATOR] ⌐26 ──────→ OUTPUT IMAGE

41

EP 2 632 151 A2

# FIG.8

# FIG.9

# FIG.10

| BLOCK NUMBER | INPUT LINE NUMBER (Lno) | | | | LINES TO BE STORED | | |
|---|---|---|---|---|---|---|---|
| 1 | 1 | TO | 48 | | Lno | TO | Lno+20 |
| 2 | 49 | TO | 96 | | Lno-1 | TO | Lno+19 |
| 3 | 97 | TO | 144 | | Lno-2 | TO | Lno+18 |
| 4 | 145 | TO | 192 | | Lno-3 | TO | Lno+17 |
| 5 | 193 | TO | 240 | | Lno-4 | TO | Lno+16 |
| 6 | 241 | TO | 288 | | Lno-5 | TO | Lno+15 |
| 7 | 289 | TO | 336 | | Lno-6 | TO | Lno+14 |
| 8 | 337 | TO | 384 | | Lno-7 | TO | Lno+13 |
| 9 | 385 | TO | 432 | | Lno-8 | TO | Lno+12 |
| 10 | 433 | TO | 480 | | Lno-9 | TO | Lno+11 |
| 11 | 481 | TO | 528 | | Lno-11 | TO | Lno+9 |
| 12 | 529 | TO | 576 | | Lno-12 | TO | Lno+8 |
| 13 | 577 | TO | 624 | | Lno-13 | TO | Lno+7 |
| 14 | 625 | TO | 672 | | Lno-14 | TO | Lno+6 |
| 15 | 673 | TO | 720 | | Lno-15 | TO | Lno+5 |
| 16 | 721 | TO | 768 | | Lno-16 | TO | Lno+4 |
| 17 | 769 | TO | 816 | | Lno-17 | TO | Lno+3 |
| 18 | 817 | TO | 864 | | Lno-18 | TO | Lno+2 |
| 19 | 865 | TO | 912 | | Lno-19 | TO | Lno+1 |
| 20 | 913 | TO | 960 | | Lno-20 | TO | Lno |

# FIG.11

| BLOCK NUMBER | INPUT LINE NUMBER (Lno) | | | | LINES TO BE STORED | | |
|---|---|---|---|---|---|---|---|
| 1 | 1 | TO | 45 | | Lno | TO | Lno+20 |
| 2 | 46 | TO | 91 | | Lno-1 | TO | Lno+19 |
| 3 | 92 | TO | 137 | | Lno-2 | TO | Lno+18 |
| 4 | 138 | TO | 182 | | Lno-3 | TO | Lno+17 |
| 5 | 183 | TO | 228 | | Lno-4 | TO | Lno+16 |
| 6 | 229 | TO | 274 | | Lno-5 | TO | Lno+15 |
| 7 | 275 | TO | 320 | | Lno-6 | TO | Lno+14 |
| 8 | 321 | TO | 365 | | Lno-7 | TO | Lno+13 |
| 9 | 366 | TO | 411 | | Lno-8 | TO | Lno+12 |
| 10 | 412 | TO | 457 | | Lno-9 | TO | Lno+11 |
| 11 | 458 | TO | 502 | | Lno-10 | TO | Lno+10 |
| 12 | 503 | TO | 548 | | Lno-11 | TO | Lno+9 |
| 13 | 549 | TO | 594 | | Lno-12 | TO | Lno+8 |
| 14 | 595 | TO | 640 | | Lno-13 | TO | Lno+7 |
| 15 | 641 | TO | 685 | | Lno-14 | TO | Lno+6 |
| 16 | 686 | TO | 731 | | Lno-15 | TO | Lno+5 |
| 17 | 732 | TO | 777 | | Lno-16 | TO | Lno+4 |
| 18 | 778 | TO | 822 | | Lno-17 | TO | Lno+3 |
| 19 | 823 | TO | 868 | | Lno-18 | TO | Lno+2 |
| 20 | 869 | TO | 914 | | Lno-19 | TO | Lno+1 |
| 21 | 915 | TO | 960 | | Lno-20 | TO | Lno |

# FIG.12

```
          ┌──────────────┐
          │    START     │
          └──────┬───────┘
                 ↓
      ┌────────────────────┐
      │  DETECT Vsync_in   │───S101
      └─────────┬──────────┘
                ↓
      ┌────────────────────┐
      │ RESET COUNT VALUE  │───S102
      │    (cnt<=0;)       │
      └─────────┬──────────┘
                ↓
      ┌────────────────────┐
      │  DETECT Hsync_in   │───S103
      └─────────┬──────────┘
                ↓
      ┌────────────────────┐
      │INCREMENT COUNT VALUE│──S104
      │   (cnt<=cnt+1;)    │
      └─────────┬──────────┘
                ↓
            S105
         ╱ WHAT IS ╲
        ╱ QUOTIENT OF ╲
       ╱ (COUNT VALUE-1)/48? ╲
```

S110 / S111 / S119

STORE (Lno)TH TO (Lno+20)TH LINES — 0

STORE (Lno-1)TH TO (Lno+19)TH LINES — 1 ...

STORE (Lno-20)TH TO (Lno)TH LINES — 19

S120 LAST LINE? (cnt==960?) NO / YES

# FIG.13

EP 2 632 151 A2

# FIG.14

31 PIXELS

21 LINES

A

L1
L2

· · ·

L14
L15
L16

A'

# FIG.15

SECOND QUADRANT

FIRST QUADRANT

y

x

THIRD QUADRANT

FOURTH QUADRANT

POSITION CORRESPONDING
TO OPTICAL CENTER

**EP 2 632 151 A2**

**REFERENCES CITED IN THE DESCRIPTION**

**Patent documents cited in the description**

- JP 2008236544 A